# EUROPEAN PATENT APPLICATION

(11) **EP 1 643 354 A2**
(43) Date of publication of application: **05.04.2006**
(21) Application number: 05255592.7
(22) Date of filing: 13.09.2005
(51) Int. Cl.: G06F 3/06, G06F 3/08

(54) **An apparatus and a method for integrating a universal serial bus user interface with a card reader**

(30) Priority: 29.09.2004 US 954376
(71) Applicant: Hewlett-Packard Development Company, L.P., Houston, TX 77070 (US)
(72) Inventor: Neal, Thomas S., Curpertino, CA 95014 (US); NG, Kai Ming, San Jose, CA 95139 (US); Norman, John, San Jose, CA 95129 (US)
(74) Representative: Jackson, Richard Eric

(57) **Abstract**

Embodiments of the present invention pertain to apparatuses and methods are described. In one embodiment, a USB user interface is integrated with a card reader. The card reader is used for reading information from a card. A USB port is coupled with the USB user interface so that the USB user interface can communicate with the USB port.

## Description

### TECHNICAL FIELD

Embodiments of the present invention relate to universal serial bus interfaces. More specifically, embodiments of the present invention relate to integrating a universal serial bus user interface with a card reader.

### BACKGROUND ART

A card reader is a device that can read magnetic information associated with a card. Frequently, a universal serial bus (USB) interface is used for communicating the magnetic information that is read by the card reader to a mother board, for example, using a port

A universal serial bus (USB) is a hardware interface that allows for low-speed peripherals, such as the keyboard, mouse, joystick, etc., to be plugged into a computer. Up to 127 devices can be attached to a computer using a USB. USB is especially known for allowing peripherals to be plugged in an unplugged without turning the computer off (also known as "hot swapping"). Because USB allows low-speed peripherals to be plugged into a computer as well as "hot swapping", many experts believe that USB will replace serial and parallel ports. ,

Further, the cost of computers is constantly dropping forcing manufacturers of computers to constantly look for new ways to cut their costs in manufacturing computers so they can stay competitive. One way of cutting the costs of manufacturing is to integrate USB capabilities with existing components Therefore, an apparatus and a method that allows manufacturers to provide USB capabilities on a computer at a reduced price would be of value.

### DISCLOSURE OF THE INVENTION

Embodiments of the present invention pertain to an apparatus and methods wherein a USB user interface is integrated with a card reader, wherein the card reader is used for reading information from a card. A USB port is coupled with the USB user interface so that the USB user interface can communicate with the USB port.

### BRIEF DESCRIPTION OF THE DRAWINGS

The accompanying drawings, which are incorporated in and form a part of this specification, illustrate embodiments of the invention and, together with the description, serve to explain the principles of the invention:
FIG. 1A is a block diagram of the front view a legacy computer that provides USB capabilities.
FIG. 1B is a block diagram of the top view of the legacy computer that provides USB capabilities.
FIG. 2A is a block diagram of the top view for an exemplary apparatus for integrating one USB user interface with a card reader, according to one embodiment of the present invention.
FIG. 2B is a block diagram of the front view of a computer case that can be used with a card reader, such as card reader 200A, that has one integrated USB user interface, according to one embodiment..
FIG. 2C is a block diagram of a front view of a computer case that can be used with a card reader that has an integrated USB user interface, according to one embodiment. ,
FIG. 3 is a block diagram of an exemplary apparatus for integrating two USB user interfaces with a card reader, according to another embodiment of the present invention.
FIG. 4 depicts a flowchart for a method of integrating a USB user interface with a card reader, according to embodiments of the present invention.

The drawings referred to in this description should not be understood as being drawn to scale except if specifically noted.

### BEST MODE FOR CARRYING OUT THE INVENTION

Reference will now be made in detail to various embodiments of the invention, examples of which are illustrated in the accompanying drawings. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following description of the present invention, numerous specific details are set forth in order to provide a thorough understanding of the present invention. In other instances, well-known methods, procedures, components, and circuits have not been described in detail as not to unnecessarily obscure aspects of the present invention.

### OVERVIEW OF LEGACY SYSTEM

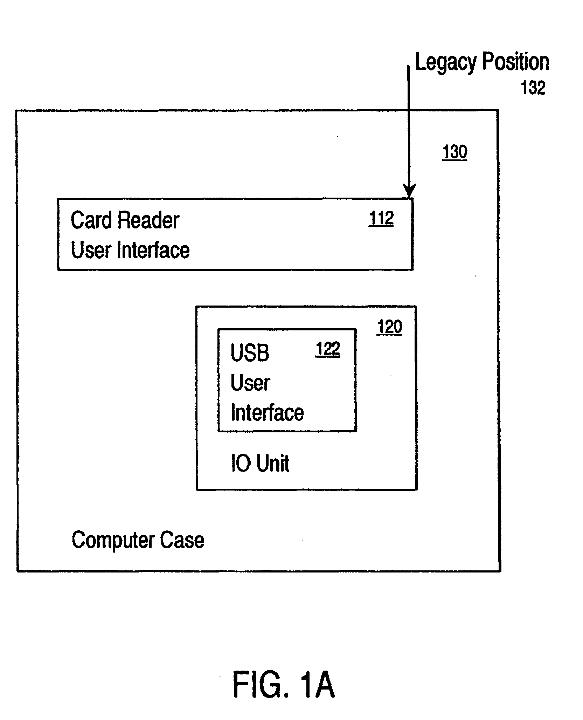

FIG. 1A is a block diagram of the front view a legacy computer that provides USB capabilities. As depicted in FIG. 1A, the legacy computer 100 includes a computer case 130, a card reader (CR) user interface (UI) 112, an input/output (IO) unit 120, and one universal serial bus (USB) user interface (UI) 122 that is integrated with the IO unit 120. The position 132 of card reader user interface 112 on the computer case 130 for the legacy computer 100 is referred to herein as the "legacy position 132."

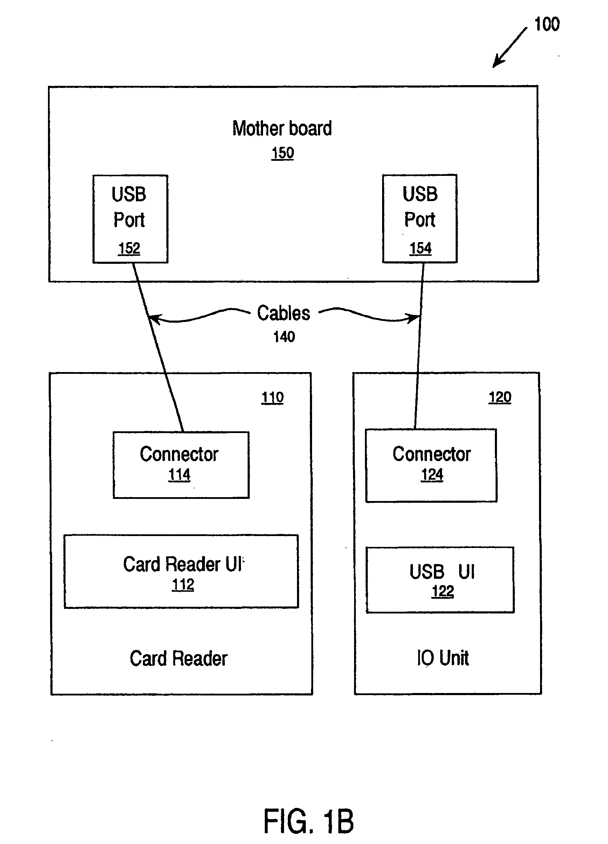

FIG. 1B is a block diagram of the top view of the legacy computer that provides USB capabilities. In FIG. 1B, the top view of the card reader 110 with the card reader user interface 112 and the IO unit 120 with the USB user interface 122 are also depicted. Further, computer 100 includes a mother board 150 with two USB ports 152, 154 that are communicatively connected respectively to the card reader user interface 112 and the USB user interface 122 via cables 140 and connectors 114, 124.

In the legacy computer 100, the USB capabilities were provided by integrating the USB user interface 122 into an IO unit 120. According to one embodiment of the present invention, USB user interfaces 122 are integrated with a card reader allowing USB capabilities to be provided at a reduced cost compared to that of the USB capabilities (e.g., via IO unit 120 and USB user interface 122) associated with legacy computers because additional components, such as the IO unit 120, are not required.

As mother boards with more than two USB ports were designed, a need for providing USB capabilities at a reduced cost became greater. Further, it became evident that using card readers with integrated USB user interfaces could also be used with computers that had only two USB ports.

### OVERVIEW OF APPARATUS AND METHOD FOR INTEGRATING A USB

### USER INTERFACE WITH A CARD READER

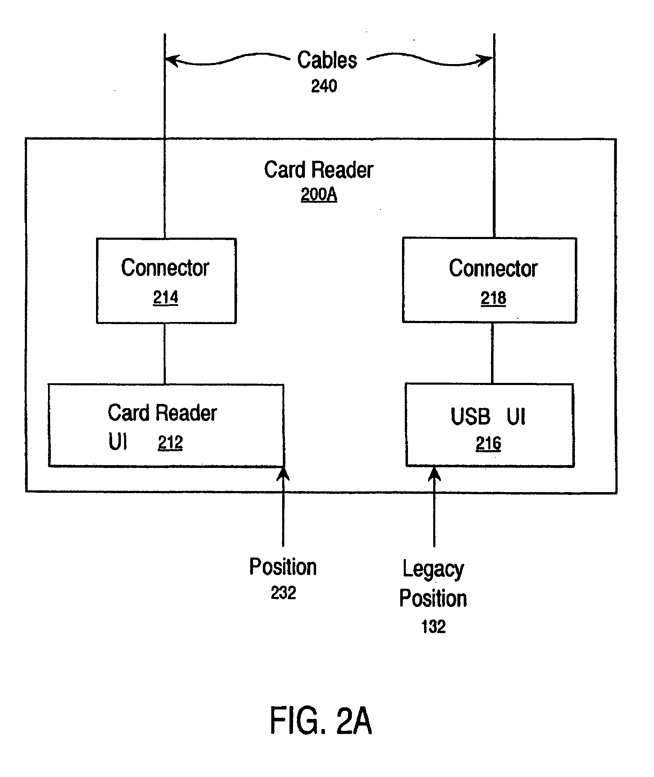

FIG. 2A is a block diagram of the top view for an exemplary apparatus for integrating one USB user interface with a card reader, according to one embodiment of the present invention. The blocks in FIG. 2A can be arranged differently than as illustrated, and can implement additional or fewer features than what are described herein.

The card reader 200A, according to one embodiment, includes one USB user interface 216 that is integrated with the card reader 200A. Further, the card reader 200A includes an integrated card reader user interface 212, according to another embodiment. The card reader user interface 212 and the USB user interface 216, according to another embodiment, are communicatively coupled respectively to USB ports using connectors 214, 218 and cables 240.

To allow room for the USB user interface 216, the position 232 of the new card reader user interface 212 is in a different location in relation to the position 132 (FIG. 1A), e.g., "legacy position", of the legacy card reader user interface 212, according to one embodiment. For example, the new card reader user interface 212 is to the left of the position of the legacy card reader. More specifically, the position 232 of the new card reader user interface 212 can be approximately 3/16^{th} of an inch to the left of the position 132 of the legacy card reader user interface 212. Card reader 200A can be used with computers that have mother boards with two or more USB ports, according to yet another embodiment.

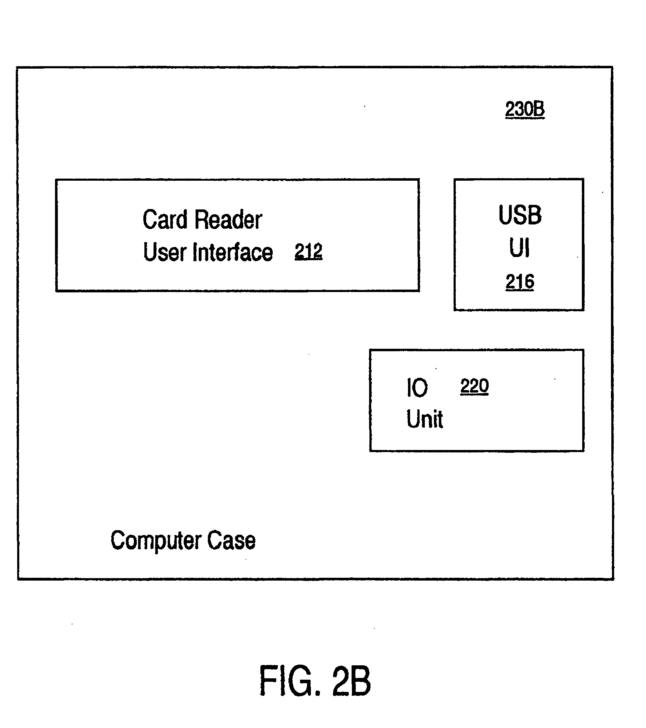

FIG. 2B is a block diagram of the front view of a computer case that can be used with a card reader, such as card reader 200A, that has one integrated USB user interface, according to one embodiment. As depicted in FIG. 2B, the computer case 230B includes card reader user interface 212, USB user interface 216, and IO unit 220. In the event that the mother board for the computer using the configuration depicted in FIG. 2B includes only two USB ports, the IO unit 220 can be blank, according to one embodiment.

Card reader 200A can be used with computers that have mother boards with three or more USB ports, according to one another embodiment. For example, card reader 200A can be used to manufacture HP™ Pavilion™ computers, according to one embodiment, and Compact™ Presario™ computers, according to another embodiment.

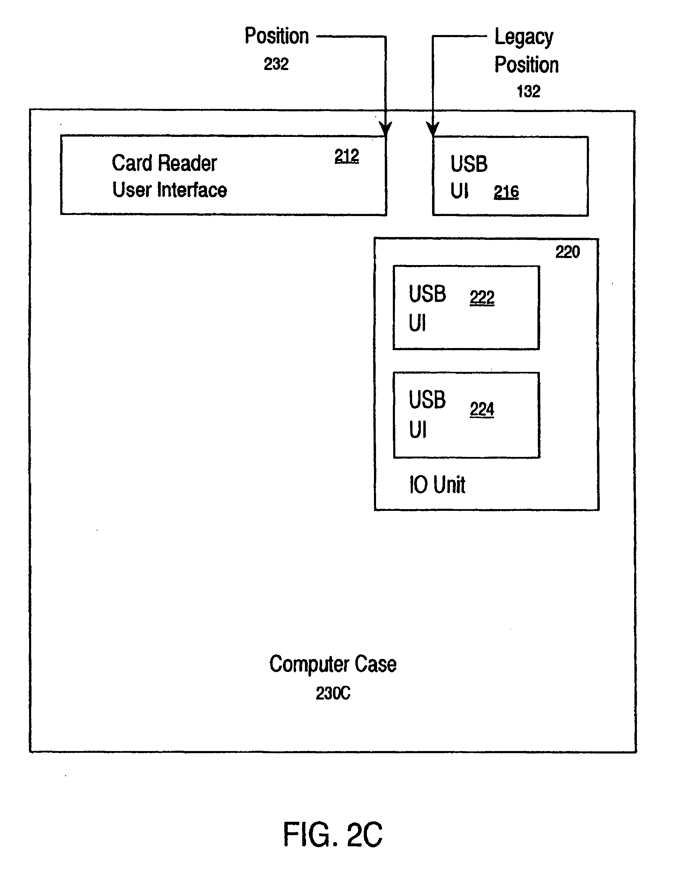

FIG. 2C is a block diagram of a front view of a computer case that can be used with a card reader that has an integrated USB user interface, according to one embodiment. The blocks in FIG. 2C can be arranged differently than as illustrated, and can implement additional or fewer features than what are described herein.

As depicted in FIG. 2C, the computer case 230C can be used with a mother board that provides four USB ports, according to one embodiment, and a card reader, such as card reader 200A, that has one integrated USB user interface 216, according to yet embodiment. Further, the computer case 200C includes a card reader user interface 212 with one USB user interface 216 that is integrated with the card reader, and IO unit 220, according to another embodiment. The IO unit 220 has two USB user interfaces 222, 224 for the additional USB ports (e.g., beyond the two USB ports used for the card reader user interface 212 and the USB user interface 216 integrated with the card reader).

The position 232 of the card reader user interface 212, according to one embodiment, is moved in relation to the position 132 (FIG. 1A) of the legacy card reader user interface 112 (FIG. 1A) to allow room for the USB user interface 216 to be integrated on a card reader, such as card readers 200A.

The configuration depicted in FIG. 2C (e.g., card reader with an integrated USB user interface 216 and a IO unit 220 with two USB UIs) can be used with computers that have 4 or more USB ports, according to one another embodiment. For example, the configuration depicted in FIG. 2C can be used to manufacture HP™ Pavilion™ computers, according to one embodiment, and Compact™ Presario™ computers, according to another embodiment.

Although two USB user interfaces 220, 224 are depicted with the IO unit 220 in FIG. 2C, the IO unit 220 (FIG. 2C) can provide only one USB user interface, for example, if the mother board used with the computer case 200C had only three USB ports.

### CARD READER WITH TWO INTEGRATED USB USER INTERFACES

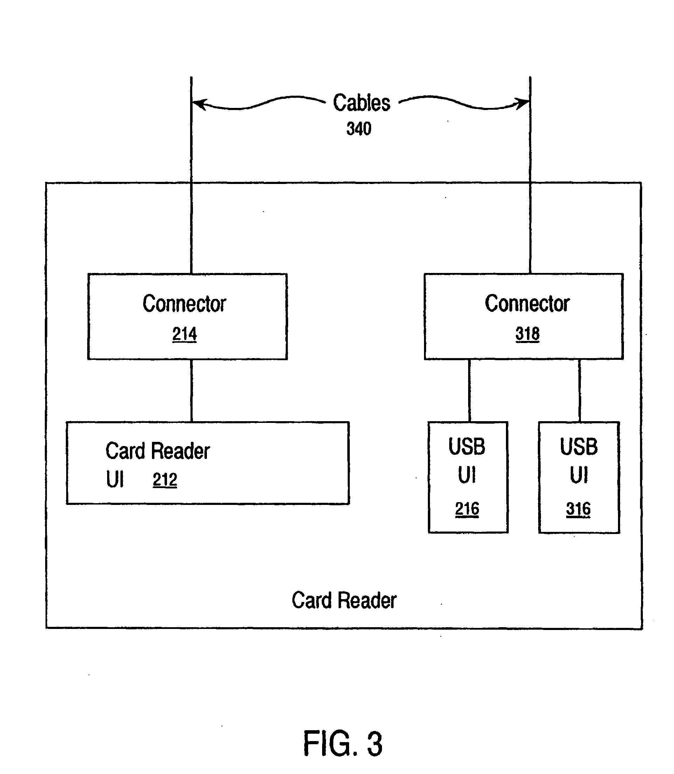

FIG. 3 is a block diagram of an exemplary apparatus for integrating two USB user interfaces with a card reader, according to another embodiment of the present invention. The blocks in FIG. 3 can be arranged differently than as illustrated, and can implement additional or fewer features than what are described herein. Card reader 300 is used with computers that have three or more USB ports, according to one embodiment.

As depicted in FIG. 3, card reader 300, according to one embodiment, includes two USB user interfaces that are integrated with the card reader 300. Further, the card reader 300 includes a card reader user interface 212, according to another embodiment. The card reader user interface 212, according to one embodiment, is communicatively coupled to a USB port using connector 214 and the two USB user interfaces 216, 316, according to another embodiment, are communicatively coupled to two more USB ports using connector 318. The connectors 214, 318, according to yet another embodiment, are communicatively coupled respectively to the USB ports with cables 340.

Card reader 300 can be used with computers that have three or more USB ports, according to another embodiment. For example, card reader 300 can be used to manufacture HP™ Pavilion™ computers, according to one embodiment, and Compact™ Presario™ computers, according to another embodiment.

Card readers 200A and 300 are also known in the art as "card reader chassis modules" or "card reader personal computer boards".

### CONNECTORS

Connectors, such as connectors 214, 218, 318 (FIG. 2A, 3), typically provide connection between devices, such as card reader user interfaces, USB user interfaces and USB ports, using "pins." A connector can have one row (also commonly referred to as a "slot") of pins or two rows of pins. A connector with one row of N pins is common referred to as a 1 x n connector. According to one embodiment connectors 214, 218 have one row of pins, and according to another embodiment, connector 318 has two rows of pins. In the case of connector 318, the cable that connects USB user interface 216 with connector 318 is plugged into one row of connector 318's pins and the cable that connects USB user interface 316 with connector 318 is plugged into the second row of connector 318's pins.

Connectors that are used in communicatively coupling USB user interfaces, which are integrated on card readers, with USB ports, which can be on mother boards according to one embodiment, have 5 pins or more, according to another embodiment. More specifically a connector with one row of 5 pins is referred to as a 1 x 5 connector. Further, a connector with two rows of 5 pins is referred to as a 2 x 5 connector. More specifically, in the case of 5 pins, connector A is a 1 x 5 connector and connector 318 is a 2 x 5 connector. According to yet another embodiment, connectors 214, 218, 318 arc universal connectors.

### A METHOD OF INTEGRATING A USB USER INTERFACE WITH A CARD READER

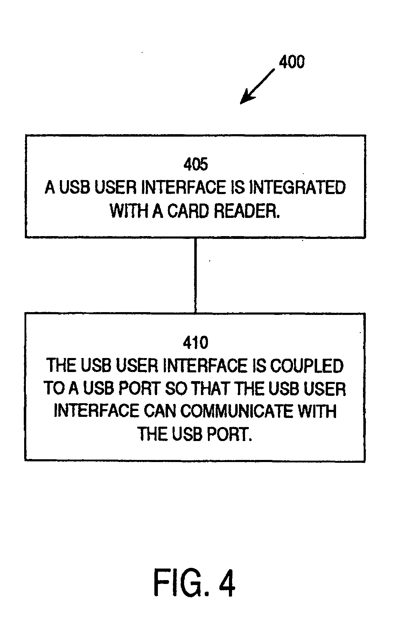

FIG. 4 depicts a flowchart 400 for a method of integrating a USB user interface with a card reader, according to embodiments of the present invention. The method, as illustrated by flowchart 400, can be used, for example, in making (e.g., "manufacturing") a card reader with an integrated USB user interface. Although specific steps are disclosed in flowchart 400, such steps are exemplary. That is, embodiments of the present invention are well suited to performing various other steps or variations of the steps recited in flowchart 400. It is appreciated that the steps in flowchart 400 may be performed in an order different than presented, and that not all of the steps in flowchart 400 may be performed.

For the purposes of illustration, the discussion of flowchart 400 shall refer to the structures depicted in FIG. 2A.

In step 405, a USB user interface is integrated with a card reader for a computer, according to one embodiment. For example, card reader 200A, according to one embodiment, includes one USB user interface 216 that is integrated, using embodiments described herein, with the card reader 200A. Further, the card reader 200A includes a card reader user interface 212, according to another embodiment.

To allow room for the USB user interface 216, the position 232 of the new card reader user interface 212 is moved in relation to the position 132 (e.g., "legacy position") of the legacy card reader user interface 112 (FIG. 1A), according to one embodiment. For example, the new card reader user interface 212 is moved to the left of the position 132 of the legacy card reader user interface 112 (FIG. 1A).

In step 410, a USB user interface is coupled to a USB port so that the USB user interface can communicate with the USB port, according to another embodiment. For example, the USB user interface 216, according to another embodiment, is communicatively coupled to a USB port using a connector 218 and one of the cables 240 so that the USB user interface 216 can communicate with a USB port.

### CONCLUSION

A USB user interface, such as USB user interface 216, 316 (FIGS. 2A, 3), can be manufactured for approximately 14 cents, according to one embodiment, which is a significant savings as compared to creating a USB user interface 122 (FIG. 1A) using a separate component, such as an IO unit 120 (FIG. 1A). Although there has been a need for manufacturing USB user interfaces for a long time, previous attempts had always involved using a separate module, such as an IO unit 120 (FIG. 1A), thus, teaching away from using an existing module, such as a card reader 200A, 300 (FIGS. 2A, 3). Further, previous attempts did not considered shifting the card reader user interface over to allow room for a USB user interface on a card reader.

## Claims

1. An apparatus for interfacing a computer system with an external USB drive and a card device, the apparatus comprising:
a USB user interface (216) which is integrated with a card reader (200A), wherein the card reader is used for reading information from a card; and
a USB port which is coupled (218, 240) with the USB user interface (216) so that the USB user interface can communicate with the USB port.

2. The apparatus of Claim 1, wherein a position (232) a new card reader interface is in a different location in relation to a position (132) of a legacy card reader user interface allows room for the USB user interface (216).

3. The apparatus of Claim 2, wherein the position of the new card reader interface is 3/16^{th} of an inch to the left of the position of the legacy card reader user interface.

4. The apparatus of Claim 1, further comprising:
a IO unit (220); and
a second USB port coupled to the IO unit, wherein the IO unit can communicate with the second USB port.

5. The apparatus of Claim 1, further comprising
a second USB port;
a second USB user interface (316) integrated with the card reader (300); and
the second USB port is coupled with the second USB user interface so that the second USB user interface can communicate with the second USB port.

6. The apparatus of Claim 5, further comprising:
a third USB port;
an IO unit; and
the third USB port is coupled with the IO unit so that the IO unit can communicate with the third USB port.

7. The apparatus of Claim 1, further comprising:
a connector is associated with the card reader, wherein the connector has at least 5 pins; and
the connector couples the USB port with the USB user interface.

8. The apparatus of Claim 7, wherein the connector is a universal connector, the USB port is a first USB port, and the USB user interface is second USB user interface and wherein:
the universal connector couples the first USB port with the first USB user interface so that the first USB user interface can communicate with the first USB port; and
the universal connector couples the second USB port with the second USB user interface so that the second USB user interface can communicate with the second USB port.

9. A method of for integrating a Universal Serial Bus (USB) user interface with a card reader to allow access to a USB port, the method comprising:
integrating (405) a USB user interface with a card reader for a computer, wherein the card reader is used for reading information from a card; and
coupling (410) a USB port to a mother board of the computer using the USB user interface so that the USB user interface can communicate with the USB port.

10. The method as recited in Claim 9, the method further comprising:
locating a position (232) of a new card reader interface in a different location in relation to a position (132) of a legacy card reader user interface to allow room for the USB user interface.
